(19) Europäisches Patentamt / European Patent Office / Office européen des brevets

(11) **EP 2 518 528 B1**

(12) **EUROPEAN PATENT SPECIFICATION**

(45) Date of publication and mention
of the grant of the patent:
**30.11.2016  Bulletin 2016/48**

(51) Int Cl.:
*G01S 7/539* *(2006.01)*        *G01S 15/96* *(2006.01)*

(21) Application number: **12162672.5**

(22) Date of filing: **30.03.2012**

(54) **Method and apparatus for measuring target length, and computer readable media storing target length measurement program**

Verfahren und Vorrichtung zum Messen einer Objektlänge, und computerlesbares medienspeicherndes Objektlängenmessprogramm

Procédé et appareil de mesure de longueur cible et support lisibles par ordinateur stockant un programme de mesure de longueur cible

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **26.04.2011   JP 2011097756**

(43) Date of publication of application:
**31.10.2012   Bulletin 2012/44**

(73) Proprietor: **Furuno Electric Company Limited Hyogo (JP)**

(72) Inventor: **Dubuis, Jerome**
**Nishinomiya-City, Hyogo (JP)**

(74) Representative: **Williams, Michael Ian**
**Cleveland**
**10 Fetter Lane**
**London EC4A 1BR (GB)**

(56) References cited:
**EP-A1- 2 383 584      DE-A1-102005 024 716**
**US-A- 5 260 912      US-B1- 6 337 654**

## Description

The present invention relates to a method, an apparatus, and computer readable media storing a target length measurement program, which transmit a detection wave signal and measure a target length of a target object, such as fish, detected based on an echo signal.

Conventionally, ultrasonic detection apparatus, which transmit an ultrasonic wave as a detection wave signal, and detect a target object based on an echo signal, have been known. The ultrasonic detection apparatus is sometimes used as a fishfinder which detects a school of fish and a single fish, and a water bottom sediment determining apparatus which detects a water bottom sediment, such as rocks, sand, or mud.

JP1965-025555B discloses another ultrasonic detection apparatus as a fishfinder which detects fish so as to identify whether the fish is large fish (whales, tunas, sardines, mackerels, horse mackerels, etc.) or small fish (whitebaits, shrimps, etc.) by using two kinds of ultrasonic signals having different frequencies.

Currently, annual fish catches have been limited for every kind of fish (e.g., fish species), every country, and every ship in order to protect global marine resources. For example, in TAC (Total Allowable Catch), annual fish catches are limited for each country for every kind of fish. Whereas, in IVQ (Individual Vessel Quota), annual fish catches are further limited for every fishing boat and for every kind of fish. If someone lands fish exceeding the annual fish catch limitation, various kinds of penalties, such as a reduction of the fish catch of the following year, are imposed.

Thus, since annual fish catches are limited, each fisherman wishes to land well grown up fishes which are highly valuable on the market. Typically, the value of a fish is directly correlated to its fish length (L).

Conventionally, a target strength (TS) of fish is measured and the fish length (L) is calculated using the following equation.

$$L[\text{cm}] = 10^{((\text{TS-TScm})/20)}$$

Here, TScm is a common standardized value of the target strength defined in advance regardless of the kind of fish. TS is a measured value of the target strength. The common standardized value TScm of the target strength corresponds to the target strength TS of a 1-cm-long fish.

In fact, the standardized value TScm of the target strength may be different depending on the kind of fish. However, when calculating the fish length with the above equation, TScm is usually fixed to an average value of swim bladder fish (for example -66dB). Therefore, the fish length L has not been accurately calculated for every kind of fish.

US 5,260,912 discloses a side-looking fish finding apparatus that is able to distinguish fish echoes from echoes produced by other objects such as support poles, weeds and the bottom surface. An individual echo is treated as the detection of a fish if the echo signal meets certain criteria, including having a magnitude above a certain threshold and a length with a certain range.

DE 10 2005 024 716 A1 discloses a device for identifying and classifying objects such as a truck, passenger vehicle, manhole etc. Electromagnetic waves are emitted and the returned values are compared with stored characteristic values.

US 6,337,654 discloses a radar system for automatically classifying targets. A target recognition system comprises a receiver for receiving target echoed amplitude data and an interrogation apparatus (e.g., transmitter) for interrogating the target for echoed amplitude data and identifying the target as belonging to a particular target class.

The present invention is made in view of the above situation, and provides a method, an apparatus, and computer readable media storing a fish length measurement program, which can calculate a length of the fish highly accurately by identifying a kind of the fish.

According to a first aspect of the present invention there is provided a fish length measuring apparatus as defined in claim 1. Preferred features of the invention are recited in the dependent claims.

Thus, a kind of the fish is identified, and a target length of the fish is calculated using the stored standardized value of the target strength corresponding to the identified fish kind. Therefore, the fish length of the fish can be calculated accurately, without being influenced by a difference in the kind of fish.

When the standardized value of the target strength for the kind of the fish identified by the kind identifier is not stored in the memory, the calculator may calculate the target length of the fish using a predetermined common standardized value of the target strength and the target strength of the fish measured by the measuring unit. Therefore, the standardized value of the target strength for a kind of fish does not need to be particularly stored if the standardized value is substantially the same as the common standardized value so that a storage capacity of the memory can be reduced.

The transceiver may transmit two or more detection wave signals of different frequencies. The kind identifier may calculate a histogram of difference of reflection intensity of the echo signals of different frequencies, and identify the kind of the fish based on a similarity of characteristics between the calculated histogram of the difference of reflection intensity and a reference histogram set for each kind of the fish. The similarity may be a likelihood obtained from correlation processing between the histogram of the difference of reflection intensity and the reference histogram. The kind of the fish may then be calculated based on the similarity.

The fish length measuring apparatus may further include a display controller for displaying on a display unit the kind of the fish identified by the kind identifier and the fish length calculated for the kind of the fish by the calculator. The displayed contents may be presented to a user, such as a fisherman.

According to a second aspect of the present invention there is provided a method of measuring a fish length as defined in claim 5.

Therefore, the fish length of the fish can be calculated accurately, without being influenced by a difference in the kind of fish.

According to a third aspect of the present invention there is provided a computer readable medium according to claim 6.

Therefore, the fish length of the fish can be calculated accurately, without being influenced by a difference in the kind of fish.

The present disclosure is illustrated by way of example and not by way of limitation in the figures of the accompanying drawings, in which the like reference numerals indicate like elements and in which:

Fig. 1 is a block diagram showing a configuration of a substantial part of a fishfinder;
Fig. 2 is a flowchart showing processing which identifies a fish kind;
Figs. 3A and 3B are charts showing distributions (echograms) of volume backscattering strength differences ΔSV according to the fish kinds;
Fig. 4 is a graph showing actual measurement histograms HisΔSV according to the fish kinds;
Figs. 5A and 5B are graphs illustrating a concept of a likelihood Lx;
Fig. 6 is a flowchart showing processing which calculates a fish length;
Fig. 7 is a table showing the standardized value of target strength (TScm); and
Fig. 8 is a view showing an example screen image.

Hereinafter, a fishfinder 1 according to one embodiment of a target length measuring apparatus of the present invention is particularly described.

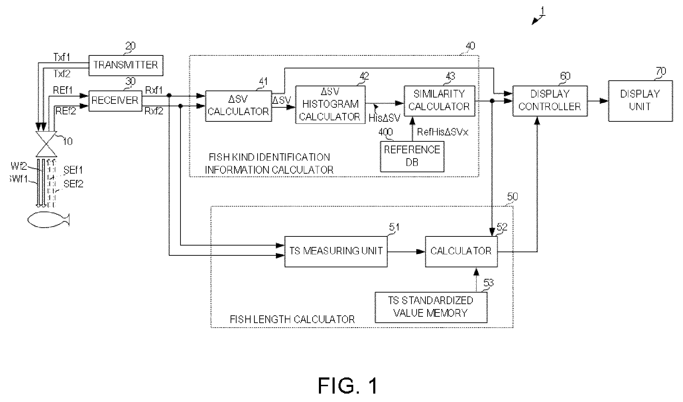

Fig. 1 is a block diagram showing a configuration of a substantial part of the fishfinder 1. The fishfinder 1 includes a transducer 10, a transmitter 20, a receiver 30, a fish kind identification information calculator 40, a fish length calculator 50, a display controller 60, and a display unit 70.

The transmitter 20 generates an ultrasonic transmission signal and outputs it to the transducer 10. The transmitter 20 can generate ultrasonic transmission signals of different frequencies. In this embodiment, the transmitter 20 generates two kinds of ultrasonic transmission signals (Txf1 and Txf2) at 60kHz as a first frequency f1 and 200kHz as a second frequency f2, respectively.

Note that the transmitter 20 may generate three or more kinds of ultrasonic transmission signals having different frequencies. Moreover, the frequencies of the ultrasonic transmission signals may not be limited to 60kHz and 200kHz.

The transmitter 20 outputs the ultrasonic transmission signal Txf1 at the first frequency f1 and the ultrasonic transmission signal Txf2 at the second frequency f2 to the transducer 10 at a predetermined time interval (e.g., at every PING). The transmitter 20 switches the frequency at every PING.

In this embodiment, the transmitter 20 alternately transmits, for every PING, the ultrasonic transmission signal Txf1 at the first frequency f1 and the ultrasonic transmission signal Txf2 at the second frequency f2. However, the transmitter 20 may also transmit the ultrasonic transmission signal Txf1 and the ultrasonic transmission signal Txf2 simultaneously.

The transducer 10 includes one or more ultrasonic transducers corresponding to the above frequencies. The transducer 10 transmits ultrasonic waves SWf1 and SWf2 to underwater based on the ultrasonic transmission signals Txf1 and Txf2, respectively. The transducer 10 receives, by the ultrasonic transducer(s), reflection waves SEf1 and SEf2 which are produced by the ultrasonic waves SWf1 and SWf2 reflecting on a target object, respectively. In this embodiment, the target object may be a school of fish or a single fish, and in the following description, the target object may be described as a "school of fish (which typically contains substantially the same kind of plural fish)" or simply "fish" although the terms may be interchangeable herein. Moreover, the term "kind of fish" or "fish kind" as used herein refers to a fish specie, and may also be used when discriminating between male fish and female fish which may be significantly different in size even if the fish specie is the same, for example. The transducer 10 then generates echo signals REf1 and REf2 based on the received reflection waves, respectively, and outputs them to the receiver 30.

The receiver 30 samples the inputted echo signals REf1 and REf2 at a predetermined sampling time interval, and generates reception data Rxf1 and Rxf2, respectively. In this embodiment, this sampling time interval is set based on a distance resolution of the apparatus in a water depth direction. The receiver 30 then outputs the reception data Rxf1 and Rxf2 to the fish kind identification information calculator 40.

The transducer 10, the transmitter 20, and the receiver 30 constitute a transceiver in the claims.

As shown in Fig. 1, the fish kind identification information calculator 40 includes a volume backscattering strength difference (ΔSV) calculator 41, a volume backscattering strength difference (ΔSV) histogram calculator 42, a similarity calculator 43, and a reference database (DB) 400.

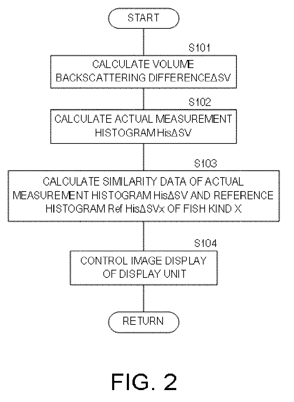

The fish kind identification information calculator 40 identifies a kind of the detected fish. Fig. 2 is a flowchart showing particular identification processing of the kind of fish.

The ΔSV calculator 41 calculates a volume backscattering strength difference ΔSV based on the reception data inputted from the receiver 30 at each frequency (S101).

Next, processing for calculating the volume backscattering strength difference ΔSV is described in detail. The ΔSV calculator 41 acquires the reception data Rxf1 at the first frequency f1 and the reception data Rxf2 at the second frequency f2, and calculates a volume backscattering strength SV1 based on the reception data Rxf1 as a way of expressing reflection intensity of the reception data Rxf1 and calculates a volume backscattering strength SV2 based on the reception data Rxf2 as a way of expressing reflection intensity of the reception data Rxf2.

The ΔSV calculator 41 determines whether the calculated volume backscattering strengths SV1 and SV2 are greater than predetermined thresholds Th1 and Th2, respectively. The thresholds Th1 and Th2 are set in order to distinguish a significant echo from noise. If the volume backscattering strength SV1 is greater than the threshold Th1 (SV1>Th1) and if the volume backscattering strength SV2 is greater than the threshold Th2 (SV2>Th2), the ΔSV calculator 41 then calculates the volume backscattering strength differences ΔSV. The volume backscattering strength difference ΔSV is a difference between the volume backscattering strength SV1 and the volume backscattering strength SV2.

If the volume backscattering strength SV1 is less than a threshold Th1 or if the volume backscattering strength SV2 is less than a threshold Th2, the ΔSV calculator 41 then omits the calculation of the volume backscattering strength differences ΔSV to reduce a load of apparatus resources.

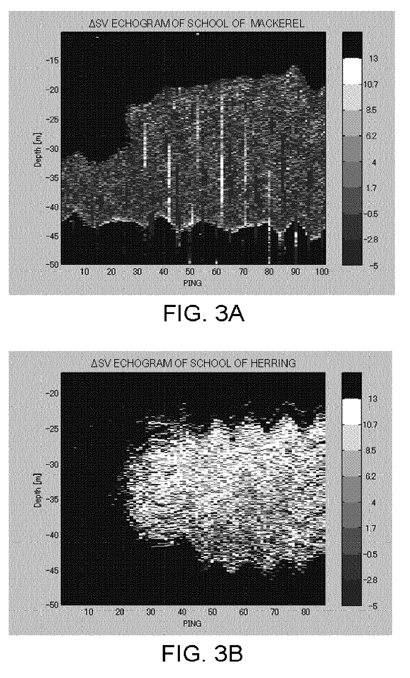

As shown in Figs. 3A and 3B, the volume backscattering strength difference ΔSV indicates different characteristics depending on the kind of fish. Figs. 3A and 3B are charts showing distributions (echograms) of the volume backscattering strength difference ΔSV according to the kind of fish, where Fig. 3A shows a distribution for mackerels and Fig. 3B shows a distribution for herrings. In Figs. 3A and 3B, the horizontal axis shows PING numbers, whereas the vertical axis shows water depth. Also in Figs. 3A and 3B, the volume backscattering strength difference ΔSV is expressed by luminance gradation.

As shown in Figs. 3A and 3B, the distribution of the volume backscattering strength difference ΔSV differs between mackerels and herrings. Thus, if the above calculation of the volume backscattering strength difference ΔSV is used, the volume backscattering strength differences ΔSV(M) of mackerels are distributed at a lower level than the volume backscattering strength differences ΔSV(H) of herrings. Therefore, one fish kind identification information can be acquired by calculating the volume backscattering strength difference ΔSV. After calculating the volume backscattering strength difference ΔSV for every PING and every water depth position, the ΔSV calculator 41 outputs the volume backscattering strength differences ΔSV to the ΔSV histogram calculator 42.

Returning to Fig. 2, the ΔSV histogram calculator 42 calculates an actual measurement histogram HisΔSV based on the volume backscattering strength differences ΔSV for all PINGS and for all positions in the water depth direction (S102).

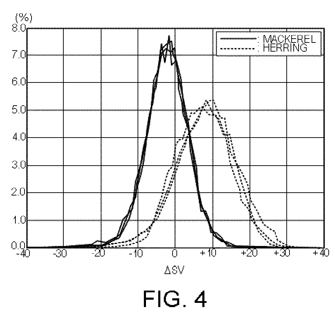

Fig. 4 is a graph showing the actual measurement histograms HisΔSV for each kind of fish. In Fig. 4, solid lines are the actual measurement histograms HisΔSV of mackerels, and dashed lines are the actual measurement histograms HisΔSV of herrings. Fig. 4 shows the actual measurement histograms HisΔSV calculated from three different mackerel fish schools and three different herring fish schools.

As shown in Fig. 4, the actual measurement histograms HisΔSV of the volume backscattering strength differences ΔSV have substantially the same characteristics if the fish kind is the same, whereas it has completely different characteristics if the fish kind differs. For example, if using the above calculation method of the volume backscattering strength difference ΔSV for mackerels, a peak of the histogram appears when the volume backscattering strength difference ΔSV is around -5 to 0, showing a characteristic in which the volume backscattering strength differences ΔSV are concentrated within a narrow range. For herrings, a peak of the histogram appears when the volume backscattering strength difference ΔSV is around +10, showing a characteristic in which the volume backscattering strength differences ΔSV are distributed over a comparatively large range. Therefore, the fish kind identification information can also be acquired using such an actual measurement histogram HisΔSV of the volume backscattering strength differences ΔSV.

Again returning to Fig. 2, the ΔSV histogram calculator 42 outputs the actual measurement histogram HisΔSV calculated in S102 to the similarity calculator 43. The similarity calculator 43 calculates a similarity using the actual measurement histogram HisΔSV (S103).

The similarity calculator 43 acquires the actual measurement histogram HisΔSV from the ΔSV histogram calculator 42. The similarity calculator 43 reads a reference histogram RefHisΔSVx of a fish kind X from the reference DB 400 in order to create similarity data. The reference DB 400 stores the reference histogram RefHisΔSVx for every fish kind X in advance.

The similarity calculator 43 performs correlation processing based on the actual measurement histogram HisΔSV and the reference histogram RefHisΔSVx of the fish kind X to obtain a correlation processing result rSX. The similarity calculator 43 also calculates a likelihood Lx of the fish kind X for which the correlation processing result rSX is obtained.

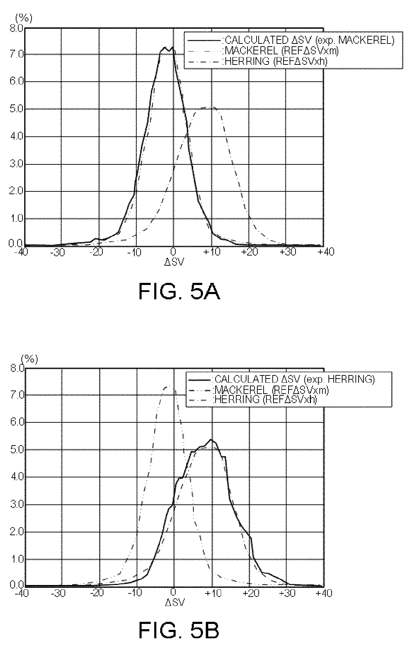

Figs. 5A and 5B are graphs showing a concept of the likelihood Lx, where Fig. 5A shows a case where the actual measurement histogram HisΔSV is for mackerels, and Fig. 5B shows a case where the actual measurement histogram HisΔSV is for herrings.

As shown in Fig. 5A, if the actual measurement

histogram His∆SV is for mackerels, the characteristics of the actual measurement histogram His∆SV become very close to the characteristics of the reference histogram RefHis∆SVxM, and, the correlation processing result rSX for this case will naturally approach "1" (1 meaning perfect correlation). On the other hand, the characteristics of the actual measurement histogram His∆SV do not comparatively match with the reference histogram RefHis∆SVxH for herrings, and therefore, the correlation processing result rSX becomes some value lower than "1". For this reason, the likelihood LxM of mackerels approaches "100%" and the likelihood LxH of herrings is much lower than "100%".

As shown in Fig. 5B, if the actual measurement histogram His∆SV is for herrings, the characteristics of the actual measurement histogram His∆SV do not comparatively match with the reference histogram RefHis∆SVxM for mackerels, and therefore, the correlation processing result rSX becomes some value lower than "1" (1 meaning perfect correlation). On the other hand, the actual measurement histogram His∆SV has very similar characteristics to the reference histogram RefHis∆SVxH for herrings, and the correlation processing result rSX naturally approaches "1". For this reason, the likelihood LxM of mackerels becomes much lower than "100%", and the likelihood LxH of herrings approaches "100%".

The similarity calculator 43 performs the calculation of the likelihood Lx for every fish kind X which is set in advance.

Thus, by using the likelihood Lx for every fish kind X, a probability of being one kind of fish (i.e., a probability of a kind of fish being mackerel or herring in this embodiment) can be quantified or evaluated.

After the likelihoods Lx are calculated for all kinds of fish, the similarity calculator 43 outputs the likelihoods Lx as similarity data to the fish length calculator 50 and the display controller 60. The similarity calculator 43 also outputs the actual measurement histogram His∆SV to the display controller 60. The similarity calculator 43 also outputs to the display controller 60 the reference histogram RefHis∆SVx of each kind of fish for which the likelihood Lx is calculated (note that it does not output it to the fish length calculator 50.).

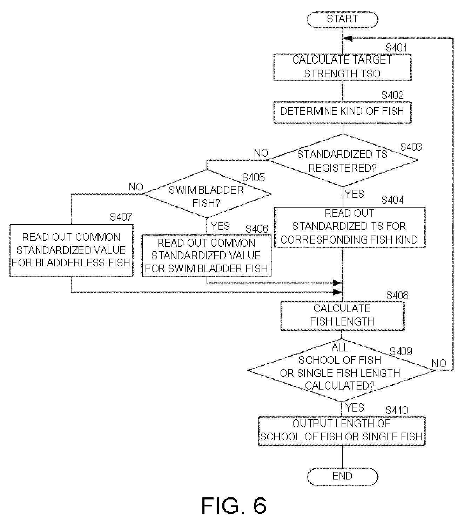

Next, the fish length calculator 50 is described in detail. Returning to Fig. 1, the fish length calculator 50 includes a target strength (TS) measuring unit 51, a calculator 52, and a target strength (TS) standardized value memory 53. The fish length calculator 50 calculates a length (fish length) of fish for which the fish kind identification information calculator 40 identified the kind of fish. Fig. 6 is a flowchart showing a calculation of the fish length.

The TS measuring unit 51 calculates a target strength TS0 based on the reception data Rxf1 at the first frequency f1 and the reception data Rxf2 at the second frequency f2 (S401). The calculation of the target strength TS0 is performed by, but not limited to, a dual beam method in this embodiment. Here, the reception data Rxf1 at the first or lower frequency f1 is used as reception data received from a wide range, and the reception data Rxf2 at the second or higher frequency f2 is used as reception data received from a narrow range.

The TS measuring unit 51 calculates the target strength TS0 for every fish for which the fish kind identification information calculator 40 identified the kind of fish. The TS measuring unit 51 inputs the target strength TS0 into the calculator 52.

The target strength TS0 is a strength of a back-scattering wave, and defined as follows.

$$TS0 = 10\log(t_s)$$

$$t_s = I_r/I_i$$

Here, $I_r$ is a strength of the back-scattering wave at a location at a unit distance from the fish, and $I_i$ is a strength of the incidence wave to the fish.

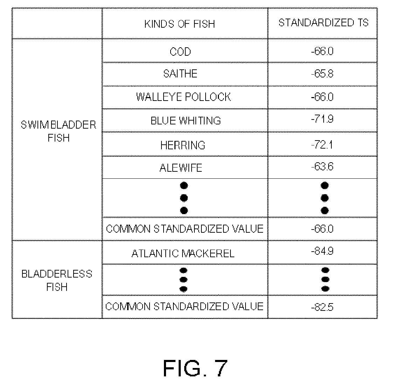

The TS standardized value memory 53 stores a standardized value table of the target strength as shown in Fig. 7. As shown in Fig. 7, the standardized value table of the target strength is a table where standardized TS are registered so as to be associated with kinds of fish. Common standardized values are registered into the standardized value table. The common standardized value is the standardized TS used for a kind of fish which is not registered into the TS standardized value table. In the standardized value table, common standardized values for swim bladder fish and common standardized values for bladderless fish are registered in this embodiment.

Note that, as described later in detail, if a standardized value for a kind of fish is substantially the same as the common standardized TS, the standardized value for the fish does not need to be registered in the standardized value table. In this way, a storage capacity of the TS standardized value memory 53 can be reduced.

Returning to Fig. 6, the calculator 52 determines a kind of fish for which the target strength TS0 is inputted from the TS measuring unit 51 (S402). In S402, the kind of fish is determined based on the similarity data inputted from the fish kind identification information calculator 40 and corresponds to the fish kind with the maximum likelihood Lx.

The calculator 52 determines whether the standardized TS of the fish kind is registered to the standardized value table (S403). If the standardized TS corresponding to the fish kind is registered (YES in S403), the calculator 52 reads out the standardized TS from the table (S404).

On the other hand, if the standardized TS of the fish kind is not registered in the standardized value table (NO in S403), the calculator 52 then determines whether the fish is swim bladder fish or bladderless fish (S405). If the fish is swim bladder fish (YES in S405), the calculator 52 reads from the standardized value table the common standardized value registered as swim bladder fish (S406). On the contrary, if the fish kind is bladderless fish (NO in S405), the calculator 52 reads from the standardized value table the common standardized value registered as bladderless fish (S407).

Thus, the calculator 52 calculates the fish length L based on the standardized TS read from the standardized value table in S404 or the common standardized value read from the standardized value table in S406 or S407, and the target strength TS0 inputted from the TS measuring unit 51 (S408). The fish length L can be calculated as follows.

$$L[cm] = 10^{((TS0-TScm)/20)}$$

Here, TScm is the standardized TS or the common standardized value.

If there is any school of fish or single fish for which the fish kind has been determined by the fish kind identification information calculation 40 and for which fish length has not been calculated (NO in S409), the calculator 52 repeats the calculation of the fish length for the remaining fish (return to S401).

Thus, since the fish length L is calculated for every fish kind based on the standardized TS corresponding to the fish kind, the fish length L can be calculated accurately for any kind of fish.

After all the calculation of the fish length L is completed (YES in S409), the calculator 52 outputs fish length data to the display controller 60 (S410).

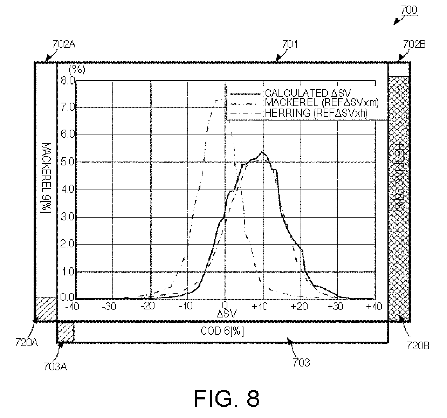

The display unit 70 may be implemented using, but not limited to, a liquid crystal display, and displays an image based on a display control by the display controller 60. The display controller 60 performs the display control which displays an image shown in Fig. 8 (e.g., a screen image 700) on the display unit 70 based on the similarity data comprised of the likelihoods Lx for every kind of fish and each of the histograms which are inputted from the similarity calculator 43, and the fish length data for every fish inputted from the calculator 52 (Fig. 2: S104).

As shown in Fig. 8, the screen image 700 includes a histogram display window 701, and likelihood display windows 702A, 702B and 703. Specifically, the histogram display window 701 is arranged in the centre of the screen image 700. The likelihood display window 702A of the likelihood LxM of mackerels and the likelihood display window 702B of the likelihood LxH of herrings are arranged on both sides of the histogram display window 701, respectively (i.e., left and right ends). The likelihood display window 703 of the likelihood LxC of cods is arranged in a lower part of the histogram display window 701 (i.e., a bottom end).

The actual measurement histogram His△SV and the reference histograms RefHis△SVx of each kind of fish of which the likelihood Lx is calculated are drawn in the histogram display window 701.

The likelihood of mackerels of the actual measurement histogram His△SV is displayed as a percentage value along with a bar 720A in the likelihood display window 702A. Here, the bar 720A is drawn by a height corresponding to the calculated likelihood so that a height of the entire window 702A corresponds to 100% likelihood. Further, a colour of the bar 720A is changed according to the likelihood.

Similarly, in the likelihood display window 702B, the likelihood of herrings of the actual measurement histogram His△SV is displayed as a percentage value along with a bar 720B. Here, the bar 720B is also drawn by a height and a colour corresponding to the calculated likelihood, similar to the bar 720A.

Similarly, in the likelihood display window 703, the likelihood of cods of the actual measurement histogram His△SV is displayed as a percentage value along with a bar 703A. Here, the bar 703A is also drawn with a width and a colour corresponding to the calculated likelihood.

Note that, although the reference histograms RefHis△SVx are shown for mackerels and herrings in Fig. 8, the reference histogram RefHis△SVx is omitted for cods.

A fish length display window, which shows a kind of fish (e.g., herrings) and the fish length L so the fish kind is associated with the fish length, may also be provided. The fish length L may be displayed as a representative value or a distribution of fish lengths may be displayed as a histogram.

Therefore, a fisherman can identify a kind of the detected fish only by viewing the screen image of the display unit 70. For example, in the example of the screen image shown in Fig. 8, the fisherman can easily recognize that the likelihood of herrings is very high because the actual measurement histogram His△SV substantially matches with the reference histogram RefHis△SVxH of herrings. The fisherman can also easily recognize that the likelihood of mackerels is low because the actual measurement histogram His△SV is different from the reference histogram RefHis△SVxM of mackerels. The fisherman can also easily recognize that the likelihood of cods is low. Therefore, the fisherman can easily determine that the detected school of fish is herrings.

Although the fishfinder 1 of this embodiment identifies the fish kind by the fish kind identification information calculator 40 using the volume backscattering strength SV as a way of expressing reflection intensity, the fish kind may be identified using other ways of expressing reflection intensity. For example, the fish kind may be identified based on target strength. Alternatively, the fish kind may be identified based on spectrum information, time waveform information, etc.

Further, although the example where correlation processing is used for the calculation of the similarity data is described in this embodiment, the likelihood Lx may also be calculated by other methods as long as the similarity between the actual measurement histogram His∆SV and the reference histogram RefHis∆SVx is reflected to the calculation of the likelihood Lx. For example, it is also possible to use the ∆SV value at which the peak of the histogram occurs, or the height of said peak, etc...

Further, although the example where a histogram is calculated using the volume backscattering strength differences ∆SV for all PINGS and for all positions in the water depth direction is described in this embodiment, the histogram may be calculated only using the volume backscattering strength difference ∆SV over a narrower range. In this case, for example, an echogram as shown in Fig. 3A or Fig. 3B may be displayed on the display unit 70, and the fisherman may then specify a range via a user interface. The fish kind identification information calculator 40 calculates the histogram only using the volume backscattering strength differences ∆SV within the specified range. Then, a likelihood is calculated based on the obtained histogram and a fish length L is calculated, in the manner described above. By allowing the fisherman to specify such a range, only a specific school of fish can be specified to check a kind of fish and a fish length even when two or more kinds of schools of fish exist close to each other, for example.

Further, although the likelihood obtained from the correlation processing for the similarity is described, the similarity may be calculated based on a characteristic amount which can be extracted from the histogram. For example, the similarity may be calculated based on at least one of the following items or a suitable combination of two or more items: a height, a width, a standard deviation, a distribution, an average and a median of the histogram, and ∆SV value at which the histogram exhibits a mode. Here, the height of the histogram refers herein to the highest frequency (or ratio) of all the volume backscattering strength differences ∆SV which constitute the histogram. The width of the histogram refers herein to a width of the volume backscattering strength difference ∆SV where the frequencies (or ratios) become more than a predetermined value.

Further, the example where the kind of fish is identified and the fish length L is calculated for the identified fish kind is described in this embodiment. However, a similar configuration and similar processing of the invention may also be applied to a water bottom sediment determining apparatus which identifies or determines that a water bottom is comprised of sand or rocks and calculates a length of the rocks. Further, the detection wave signal may be a millimetre wave signal (radio wave) when measuring a size of a ship or an island, without limiting to the ultrasonic signal described above.

## Claims

1. Fish length measuring apparatus, comprising:

   a transceiver means (10, 20, 30) operable to transmit an ultrasonic wave and receive an echo signal;
   a kind identifier means (40) operable to detect a fish and to identify a kind of said fish, based on said echo signal received by said transceiver means (10, 20, 30);
   a measuring means (51) operable to measure a target strength of said fish based on said echo signal received by said transceiver means (10, 20, 30);
   a memory means (53) operable to store standardized values of the target strength associated with kinds of fish; and
   a calculator means (52) operable to calculate a fish length of said fish using a standardized value of the target strength stored in said memory means (53) corresponding to the fish kind identified by said kind identifier means, and said target strength of said fish measured by said measuring means (51).

2. Apparatus according to claim 1, wherein, when a standardized value of the target strength for said kind of said fish identified by said kind identifier means (40) is not stored in said memory means (53), said calculator means (52) calculates said fish length of said fish using a predetermined common standardized value of the target strength stored in said memory means (53) and said target strength of said fish measured by said measuring means (51).

3. Apparatus according to claim 1 or claim 2, wherein said transceiver means (10, 20, 30) transmits two or more ultrasonic waves of different frequencies, and wherein said kind identifier means (40) calculates a histogram of difference of reflection intensity of said echo signals at said different frequencies, and identifies said kind of said fish based on a similarity of characteristics between said calculated histogram of said difference of reflection intensity and a reference histogram set for each kind of said fish.

4. Apparatus according to any claims 1 to 3, further comprising a display controller means (60) operable to display on a display means (70) said kind of said fish identified by said kind identifier means (40) and said fish length of said fish calculated by said calculator means (52).

5. A method of measuring a fish length, comprising:

   transmitting an ultrasonic wave and receiving an echo signal;

detecting a fish and identifying a kind of said fish, based on said received echo signal;

measuring a target strength of said fish based on said received echo signal; and

calculating a fish length of said fish using a predetermined standardized value of the target strength stored in a memory means (53) and corresponding to the fish kind identified, and said measured target strength.

6. Computer readable medium storing in a non-transitory manner a computer executable program, which upon execution by a processor causes the computer to measure a fish length according to a method comprising:

transmitting an ultrasonic wave and receiving an echo signal;

detecting a fish and identifying a kind of said fish, based on said received echo signal;

measuring a target strength of said fish based on said received echo signal; and

calculating a fish length of said fish using a predetermined standardized value of the target strength stored in a memory means (53) and corresponding to the fish kind identified, and said measured target strength.

**Patentansprüche**

1. Fischlängen-Messvorrichtung, aufweisend;

eine Sender-Empfänger-Einrichtung (Transceiver) (10, 20, 30), die betrieben werden kann, um eine Ultraschallwelle zu senden und ein Echosignal zu empfangen;

eine Art-Identifizierungseinrichtung (40), die betrieben werden kann, um einen Fisch zu erkennen und eine Art des Fischs zu identifizieren, und zwar basierend auf dem Echosignal, das von der Sender-Empfänger-Einrichtung (10, 20, 30) empfangen wird;

eine Messeinrichtung (51), die betrieben werden kann, um ein Zielstärkemaß (target strength) des Fischs basierend auf dem Echosignal zu messen, das von der Sender-Empfänger-Einrichtung (10, 20, 30) empfangen wird;

eine Speichereinrichtung (53), die betrieben werden kann, um standardisierte Werte des Zielstärkemaßes (target strength) zu speichern, die Fischarten zugehörig sind; und

eine Berechnungseinrichtung (52), die betrieben werden kann, um eine Fischlänge des Fischs zu berechnen, und zwar unter Verwendung eines standardisierten Wertes des Zielstärkemaßes (target strength), das in der Speichereinrichtung (53) gespeichert ist, entsprechend der Fischart, die durch die Art-Identifizierungseinrichtung identifiziert wurde, und des Zielstärkemaßes (target strength) des Fischs, die durch die Messeinrichtung (51) gemessen wurde.

2. Vorrichtung nach Anspruch 1, wobei, wenn ein standardisierter Wert des Zielstärkemaßes (target strength) für die Art des Fischs, die durch die Art-Identifizierungseinrichtung (40) identifiziert wurde, nicht in der Speichereinrichtung (53) gespeichert ist, die Berechnungseinrichtung (52) die Fischlänge des Fischs unter Verwendung eines vorbestimmten üblichen standardisierten Wertes des Zielstärkemaßes (target strength), der in der Speichereinrichtung (53) gespeichert ist, und des Zielstärkemaßes (target strength) des Fischs berechnet, der durch die Messeinrichtung (51) gemessen wurde.

3. Vorrichtung nach Anspruch 1 oder 2, wobei die Sender-Empfänger-Einrichtung (10, 20, 30) zwei oder mehr Ultraschallwellen unterschiedlicher Frequenzen aussendet, und

wobei die Art-Identifizierungseinrichtung (40) ein Histogramm einer Reflexionsstärkedifferenz der Echosignale bei unterschiedlichen Frequenzen berechnet, und die Fischart basierend auf einer Ähnlichkeit von Kennzeichen zwischen dem berechneten Histogramm einer Reflexionsstärkedifferenz und einem Referenzhistogramm identifiziert, das für jede Fischart festgelegt ist.

4. Vorrichtung nach einem der Ansprüche 1 bis 3, die weiter eine Anzeigesteuereinrichtung (60) aufweist, die betrieben werden kann, um auf einer Anzeigeeinrichtung (70) die Art des Fischs, die von der Art-Identifizierungseinrichtung (40) identifiziert wurde, und die Fischlänge des Fischs anzuzeigen, die durch die Berechnungseinrichtung (52) berechnet wurde.

5. Verfahren zum Messen einer Fischlänge, aufweisend:

Senden einer Ultraschallwelle und Empfangen eines Echosignals;

Erfassen eines Fischs und Identifizieren einer Art des Fischs, basierend auf dem empfangenen Echosignal;

Messen eines Zielstärkemaßes (target strength) des Fischs, basierend auf dem empfangenen Echosignal; und

Berechnen einer Fischlänge des Fischs unter Verwendung eines vorbestimmten standardisierten Wertes des Zielstärkemaßes (target strength), der in einer Speichereinrichtung (53) gespeichert ist, und entsprechend der identifizierten Fischart, sowie des gemessenen Zielstärkemaßes (target strength).

6. Computerlesbares Medium, auf dem in nicht-transitorischer Weise ein computerausführbares Programm gespeichert ist, das bei Ausführung durch einen Prozessor den Computer veranlasst, eine Fischlänge zu messen, und zwar gemäß einem Verfahren, das umfasst:

Senden einer Ultraschallwelle und Empfangen eines Echosignals;

Erfassen eines Fischs und Identifizieren einer Art des Fischs, basierend auf dem empfangenen Echosignal;

Messen eines Zielstärkemaßes (target strength) des Fischs, basierend auf dem empfangenen Echosignal; und

Berechnen einer Fischlänge des Fischs unter Verwendung eines vorbestimmten standardisierten Wertes des Zielstärkemaßes (target strength), der in einer Speichereinrichtung (53) gespeichert ist, und entsprechend der identifizierten Fischart, sowie des gemessenen Zielstärkemaßes (target strength).

**Revendications**

1. Appareil de mesure de longueur du poisson, comprenant :

un moyen d'émetteur-récepteur (10, 20, 30) exploitable de manière à transmettre une onde ultrasonore et à recevoir un signal d'écho ;

un moyen d'identification d'espèce (40) exploitable de manière à détecter un poisson et à identifier une espèce dudit poisson, sur la base dudit signal d'écho reçu par ledit moyen d'émetteur-récepteur (10, 20, 30) ;

un moyen de mesure (51) exploitable de manière à mesurer une force cible dudit poisson sur la base dudit signal d'écho reçu par ledit moyen d'émetteur-récepteur (10, 20, 30) ;

un moyen de mémoire (53) exploitable de manière à stocker des valeurs normalisées de la force cible associée à des espèces de poissons ; et

un moyen de calculateur (52) exploitable de manière à calculer une longueur de poisson dudit poisson en utilisant une valeur normalisée de la force cible stockée dans ledit moyen de mémoire (53), correspondant à l'espèce de poisson identifiée par ledit moyen d'identification d'espèce, et à ladite force cible dudit poisson mesurée par ledit moyen de mesure (51).

2. Appareil selon la revendication 1, dans lequel, lorsqu'une valeur normalisée de la force cible pour ladite espèce dudit poisson identifiée par ledit moyen d'identification d'espèce (40) n'est pas stockée dans ledit moyen de mémoire (53), ledit moyen de calculateur (52) calcule ladite longueur de poisson dudit poisson en utilisant une valeur normalisée commune prédéterminée de la force cible stockée dans ledit moyen de mémoire (53) et ladite force cible dudit poisson mesurée par ledit moyen de mesure (51).

3. Appareil selon la revendication 1 ou 2, dans lequel ledit moyen d'émetteur-récepteur (10, 20, 30) transmet deux ondes ultrasonores ou plus de différentes fréquences ; et

dans lequel ledit moyen d'identification d'espèce (40) calcule un histogramme de différence d'intensité de réflexion desdits signaux d'écho auxdites différentes fréquences, et identifie ladite espèce dudit poisson sur la base d'une similitude de caractéristiques entre ledit histogramme calculé de ladite différence d'intensité de réflexion et un ensemble d'histogrammes de référence pour chaque espèce dudit poisson.

4. Appareil selon l'une quelconque des revendications 1 à 3, comprenant en outre un moyen de contrôleur d'affichage (60) exploitable de manière à afficher, sur un moyen d'affichage (70), ladite espèce dudit poisson identifiée par ledit moyen d'identification d'espèce (40) et ladite longueur de poisson dudit poisson, calculée par ledit moyen de calculateur (52).

5. Procédé de mesure d'une longueur de poisson, comprenant les étapes ci-dessous consistant à :

transmettre une onde ultrasonore et recevoir un signal d'écho ;

détecter un poisson et identifier une espèce dudit poisson, sur la base dudit signal d'écho reçu ;

mesurer une force cible dudit poisson sur la base dudit signal d'écho reçu ; et

calculer une longueur de poisson dudit poisson en utilisant une valeur normalisée de la force cible stockée dans ledit moyen de mémoire (53), et correspondant à l'espèce de poisson identifiée et à ladite force cible mesurée.

6. Support lisible par ordinateur stockant de façon non transitoire un programme exécutable par ordinateur, qui, lorsqu'il est exécuté par un processeur, amène l'ordinateur à mesurer une longueur de poisson selon un procédé comprenant les étapes ci-dessous consistant à :

transmettre une onde ultrasonore et recevoir un signal d'écho ;

détecter un poisson et identifier une espèce dudit poisson, sur la base dudit signal d'écho reçu ;

mesurer une force cible dudit poisson sur la base dudit signal d'écho reçu ; et

calculer une longueur de poisson dudit poisson en utilisant une valeur normalisée de la force cible stockée dans un moyen de mémoire (53), et correspondant à l'espèce de poisson identifiée et à ladite force cible mesurée.

FIG. 1

START

S101
CALCULATE VOLUME
BACKSCATTERING DIFFERENCE ΔSV

S102
CALCULATE ACTUAL MEASUREMENT
HISTOGRAM HisΔSV

S103
CALCULATE SIMILARITY DATA OF ACTUAL
MEASUREMENT HISTOGRAM HisΔSV AND REFERENCE
HISTOGRAM Ref HisΔSVx OF FISH KIND X

S104
CONTROL IMAGE DISPLAY
OF DISPLAY UNIT

RETURN

FIG. 2

FIG. 3A

FIG. 3B

13

FIG. 4

FIG. 5A

FIG. 5B

START

CALCULATE TARGET
STRENGTH TSO
S401

DETERMINE KIND OF FISH
S402

STANDARDIZED TS
REGISTERED?
S403

NO

SWIM BLADDER
FISH?
S405

NO

READ OUT COMMON
STANDARDIZED VALUE
FOR BLADDERLESS FISH
S407

READ OUT COMMON
STANDARDIZED VALUE
FOR SWIM BLADDER FISH
YES   S406

YES

READ OUT
STANDARDIZED TS FOR
CORRESPONDING FISH KIND
S404

CALCULATE
FISH LENGTH
S408

ALL
SCHOOL OF FISH
OR SINGLE FISH LENGTH
CALCULATED?
S409

NO

YES   S410

OUTPUT LENGTH OF
SCHOOL OF FISH OR SINGLE FISH

END

FIG. 6

|  | KINDS OF FISH | STANDARDIZED TS |
|---|---|---|
| SWIM BLADDER FISH | COD | -66.0 |
|  | SAITHE | -65.8 |
|  | WALLEYE POLLOCK | -66.0 |
|  | BLUE WHITING | -71.9 |
|  | HERRING | -72.1 |
|  | ALEWIFE | -63.6 |
|  | ● ● ● | ● ● ● |
|  | COMMON STANDARDIZED VALUE | -66.0 |
| BLADDERLESS FISH | ATLANTIC MACKEREL | -84.9 |
|  | ● ● ● | ● ● ● |
|  | COMMON STANDARDIZED VALUE | -82.5 |

# FIG. 7

FIG. 8

**EP 2 518 528 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1965025555 B
- US 5260912 A
- DE 102005024716 A1
- US 6337654 B